# EUROPEAN PATENT APPLICATION

(11) **EP 4 793 089 A1**
(43) Date of publication of application: **19.08.2026**
(21) Application number: 24876138.9
(22) Date of filing: 05.07.2024
(51) Int. Cl.: B60N 2/02, A47C 7/40

(54) **SEAT, VEHICLE, AND SEAT STATE CONTROL METHOD**

(30) Priority: 13.10.2023 CN 202311331811
(71) Applicant: Yinwang Intelligent Technologies Co., Ltd., Shenzhen, Guangdong 518110 (CN)
(72) Inventor: XU, Hao, Shenzhen, Guangdong 518129 (CN); SHI, Hao, Shenzhen, Guangdong 518129 (CN); ZHU, Xin, Shenzhen, Guangdong 518129 (CN)
(74) Representative: Gill Jennings & Every LLP
(86) International application number: PCT/CN2024/104072
(87) International publication number: WO 2025/077317

(57) **Abstract**

Provided are a seat, a vehicle, and a seat status control method. The seat includes a backrest (100), a seat pan (200), and a pneumatic module (300). The pneumatic module (300) includes an air bladder (31). The air bladder (31) is located at at least one of a first position (P1) and a second position (P2). The first position (P 1) is a joint between the backrest (100) and the seat pan (200). The second position (P2) is a side that is of the backrest (100) and that is away from the seat pan (200). The air bladder (31) is configured to be capable of providing a reclining posture support structure in an expanded state.

## Description

This application claims priority to Chinese Patent Application No. 202311331811.5, filed on October 13, 2023 and entitled "SEAT, VEHICLE, AND SEAT STATUS CONTROL METHOD", which is incorporated herein by reference in its entirety.

### TECHNICAL FIELD

The present disclosure relates to the field of vehicle technologies, and in particular, to a seat, a vehicle, and a seat status control method.

### BACKGROUND

A vehicle seat includes a backrest and a seat pan, and the backrest is rotatable relative to the seat pan, allowing it to switch between a sitting posture state and a reclining posture state.

A structure of the backrest of the vehicle seat is usually designed based on a normal sitting posture. In this case, when the backrest is in the reclining posture state, an occupant's waist is usually unsupported, leading to reduced comfort in a reclining posture. In a related technology, an area of the backrest corresponding to the waist is designed as a planar shape, to improve comfort of a human body in the reclining posture. However, this also results in a decrease in comfort of the human body in the sitting posture. It can be learned that it is essential that the seat offers comfort in both sitting and reclining postures.

### SUMMARY

In view of this, the present disclosure provides a seat, a vehicle, and a seat status control method, to resolve a technical problem in a related technology.

Specifically, the following technical solutions are included.

According to one aspect, a seat is provided. The seat includes a backrest, a seat pan, and a pneumatic module. The pneumatic module includes an air bladder. The air bladder is located at at least one of a first position and a second position. The first position is a joint between the backrest and the seat pan, and the second position is a side that is of the backrest and that is away from the seat pan.

The air bladder is configured to be capable of providing a reclining posture support structure in an expanded state.

According to the seat provided in embodiments of the present disclosure, the pneumatic module is arranged, and the air bladder of the pneumatic module provides the reclining posture support structure in the expanded state, to be used in a reclining posture state of the seat. When the seat is in the reclining posture state, the air bladder located at the first position can support a human waist at the joint between the backrest and the seat pan by using the reclining posture support structure of the air bladder, to improve comfort of the human waist in the reclining posture state. In addition, the air bladder located at the second position can support a human shoulder on the side that is of the backrest and that is away from the seat pan by using the reclining posture support structure of the air bladder, preventing shoulder suspension and thereby enhancing comfort of the human shoulder in the reclining posture state. When the seat is in a sitting posture state, the air bladder is deflated to a contracted state, to avoid affecting comfort of a human body in a sitting posture. It can be learned that the seat provided in embodiments of the present disclosure can effectively improve comfort of the human body in a reclining posture without affecting the comfort of the human body in the sitting posture. In addition, based on an inflation/deflation characteristic, the air bladder in the contracted state can be easily accommodated in the seat, and only needs to be inflated during application. This facilitates storage and usage, saving space inside a vehicle.

In some possible implementations, the air bladder located at the first position is referred to as a first air bladder. The first air bladder is configured to be capable of filling a groove cavity between the backrest and the seat pan when the backrest is in the reclining posture state, and a reclining posture support structure of the first air bladder includes a first support surface for supporting a human waist.

When the backrest of the seat is in the reclining posture state, particularly in a large-angle fully reclining state, an expansion contour of the first air bladder matches a contour of the groove cavity between the backrest and the seat pan, so that the first air bladder can fill the groove cavity between the backrest and the seat pan, a gap between the seat in the reclining posture state and the human waist is effectively filled, and the human waist is effectively supported.

In some possible implementations, the reclining posture support structure of the first air bladder further includes a first attachment surface and a second attachment surface. One of the first attachment surface and the second attachment surface is attached to a side surface that is of the backrest and that is close to the seat pan, and the other is attached to a side surface that is of the seat pan and that is close to the backrest.

In some possible implementations, the air bladder located at the second position is referred to as a second air bladder. The second air bladder is configured to be capable of filling a gap between the backrest and the human shoulder when the backrest is in a reclining posture state, and a reclining posture support structure of the second air bladder includes a second support surface for supporting the human shoulder.

When the backrest of the seat is in the reclining posture state, particularly in a large-angle fully reclining state, an expansion contour of the second air bladder matches a contour of the gap between the backrest and the human shoulder, so that a gap between the seat in the reclining posture state and the human shoulder is effectively filled, and the human shoulder is effectively supported.

In some possible implementations, the air bladder includes a plurality of air cavities. There is a barrier structure between any two adjacent air cavities. The barrier structure has a vent hole. This can make a contour of a reclining posture support structure corresponding to the air bladder close enough to a target contour expected by the air bladder.

In some possible implementations, the pneumatic module further includes an air pipe, an air pump, and an air valve control member. The air bladder communicates with the air pump through the air pipe. The air valve control member is located in the air pipe.

The seat further includes a control module. The control module is electrically connected to the air pump and the air valve control member.

During application, the control module can control turn-on or turn-off of the air pump, so that inflation into the air bladder by the air pump is achieved. In addition, the control module can control opening, closing, and an opening degree of the air valve control member, so that an inflation amount inside the air bladder is adjusted, and air pressure inside the air bladder reaches a specified pressure threshold.

In some possible implementations, the pneumatic module further includes a pressure sensor. The pressure sensor is located on a surface of the air bladder and is electrically connected to the control module.

The pressure sensor is configured to: detect a pressure signal received by the air bladder, and transfer the pressure signal to the control module.

The pressure sensor detects the pressure signal received by the air bladder and transfers the pressure signal to the control module. The control module can control, based on the pressure signal, the pneumatic module to adjust an air amount of the air bladder to a target air amount (for example, control the opening degree of the air valve control member), so that the air bladder in the expanded state provides a good and comfortable sense of support for occupants. It can be learned that, based on the foregoing arrangement, the seat may adjust an air inflation/deflation amount of the air bladder based on data such as weight and pressure of occupants, so that the air bladder obtains different air pressure.

In some possible implementations, the air bladder is arranged in a built-in manner.

In addition, when the air bladder is in the contracted state, the air bladder located at at least one of the first position and the second position can be arranged into a concealed structure.

The air bladder is built in at least one of the first position and the second position on the seat, so that stable storage of the air bladder is achieved without affecting aesthetics of the seat, and loss is prevented. In addition, when the air bladder is in the contracted state, the air bladder can be arranged into the concealed structure, so that the air bladder exists in a concealed manner. This effectively avoids decreasing comfort of the seat in the sitting posture state, and also contributes to the aesthetics of the seat.

In some possible implementations, the concealed structure is formed by winding or folding the air bladder.

In some possible implementations, the pneumatic module further includes a cover. The cover is detachably located at at least one of the first position and the second position, and the cover is configured to cover and conceal the air bladder.

The cover is disposed at the first position and/or the second position of the seat, so that the air bladder can be covered and concealed. In addition, the cover is removed, so that it is convenient to inflate and expand the air bladder, and the air bladder in the contracted state is conveniently arranged, to facilitate a winding arrangement or a folding arrangement of the air bladder.

According to another aspect, an embodiment of the present disclosure further provides a vehicle. The vehicle includes a vehicle body and a plurality of seats located inside the vehicle body, and at least one of the plurality of seats is any one of the foregoing seats.

According to still another aspect, an embodiment of the present disclosure further provides a seat status control method. The seat status control method is applied to any one of the foregoing seats or the foregoing vehicles.

The seat status control method includes:
determining whether a backrest of the seat is in a reclining posture state; and
if the backrest of the seat is in the reclining posture state, controlling a pneumatic module to expand an air bladder, and making the air bladder provide a reclining posture support structure in an expanded state.

In some possible implementations, the pneumatic module further includes a pressure sensor.

The seat status control method further includes:
detecting, by the pressure sensor, a pressure signal received by the air bladder; and
controlling, based on the pressure signal, the pneumatic module to adjust an air amount of the air bladder to a target air amount.

In some possible implementations, the seat status control method further includes:
if the backrest of the seat is not in the reclining posture state, determining that the backrest of the seat is in a sitting posture state; and
prompting the air bladder to maintain a contracted state, and/or making the air bladder be arranged into a concealed structure.

In some possible implementations, the seat further includes a lumbar support. The lumbar support is located on the backrest, and the lumbar support includes a protruding state and a retracted state.

The seat status control method further includes: if the backrest of the seat is in the reclining posture state, controlling the lumbar support to be in a retracted state; and if the backrest of the seat is in a sitting posture state, controlling the lumbar support to be in the protruding state.

### BRIEF DESCRIPTION OF DRAWINGS

FIG. 1 is a diagram of a structure of an example of a seat in a sitting posture state according to an embodiment of the present disclosure;
FIG. 2 is a diagram of a structure of an example of a seat in a reclining posture state according to an embodiment of the present disclosure;
FIG. 3 is a diagram of a structure of an air bladder in a seat in a contracted state according to an embodiment of the present disclosure;
FIG. 4 is a diagram of a structure of an air bladder in a seat in an expanded state according to an embodiment of the present disclosure;
FIG. 5 is a diagram of a structure of an example pneumatic module according to an embodiment of the present disclosure;
FIG. 6 is a diagram of an example connection relationship between a pneumatic module and a control module according to an embodiment of the present disclosure;
FIG. 7 is a diagram of a structure of an example of a winding arrangement of an air bladder according to an embodiment of the present disclosure;
FIG. 8 is a diagram of a structure of an example of an air bladder in a flat state according to an embodiment of the present disclosure;
FIG. 9 is a cross-sectional view of an example of a first air bladder in an expanded state according to an embodiment of the present disclosure;
FIG. 10 is a sectional view of an example of a first air bladder in an expanded state according to an embodiment of the present disclosure;
FIG. 11 is a flowchart of an example of a seat control method according to an embodiment of the present disclosure;
FIG. 12 is a flowchart of another example of a seat control method according to an embodiment of the present disclosure;
FIG. 13 is a flowchart of still another example of a seat control method according to an embodiment of the present disclosure;
FIG. 14 is a logic flowchart of an example of a seat status control method according to an embodiment of the present disclosure; and
FIG. 15 is a logic flowchart of another example of a seat status control method according to an embodiment of the present disclosure.

### Reference numerals:

100: backrest;
200: seat pan;
300: pneumatic module;
31: air bladder;
301: first air bladder; 3010: first support surface; 3011: first attachment surface; 3012: second attachment surface;
302: second air bladder; 3020: second support surface;
311: air cavity; 312: barrier structure; 313: vent hole;
32: air pipe; 33: air pump; 34: air valve control member; 35: pressure sensor; 36: cover;
400: control module;
500: lumbar support;
P1: first position; P2: first position.

### DESCRIPTION OF EMBODIMENTS

The following clearly and completely describes the technical solutions in embodiments of the present disclosure with reference to the accompanying drawings in embodiments of the present disclosure. It is clear that the described embodiments are some but not all of embodiments of the present disclosure. All other embodiments obtained by a person of ordinary skill in the art based on embodiments of the present disclosure without creative efforts shall fall within the protection scope of the present disclosure.

Some example embodiments are presented in the accompanying drawings. When the following description relates to the accompanying drawings, unless specified otherwise, same numbers in different accompanying drawings indicate a same or similar element. In the description of embodiments of the present disclosure, it should be understood that an orientation or position relationship indicated by some orientation terms, for example, "on", "below", "front", "back", "vertical", "horizontal", "inside", and "outside", is based on an orientation or position relationship shown in the accompanying drawings. This is merely intended to facilitate description of embodiments of the present disclosure and simplifying the description, but is not intended to indicate or imply that the referred apparatus or element needs to have a specific orientation and be constructed and operated in a specific orientation. Therefore, this cannot be construed as a limitation on embodiments of the present disclosure.

It should be noted that, in a seat in embodiments of the present disclosure, a backrest is rotatable relative to a seat pan, so that an angle between the backrest and the seat pan is variable, and the seat is switched between a sitting posture state and a reclining posture state. The sitting posture state of the seat in embodiments of the present disclosure may also be considered as a sitting posture state of the backrest, and the reclining posture state of the seat may also be considered as a reclining posture state of the backrest.

A sitting posture of the seat only needs to meet a normal sitting posture of an occupant. For example, when a seat is in a sitting posture, an angle between a backrest and a seat pan may be 90°.

For a reclining posture of the seat, there may be a plurality of reclining postures based on an angle between the backrest and the seat pan. For example, when the angle between the backrest and the seat pan is 120° to 180°, and further, may be 135° to 180°, postures corresponding to the seat at different angles may be considered as a reclining posture. This type of seat may also be referred to as a large-angle backrest reclining posture seat, for example, a zero-gravity seat.

A "human waist" in embodiments of the present disclosure includes a waist area, and may be further extended to include a part of a hip area. The waist area is usually a part of a human body below a rib and above a pelvis.

A "human shoulder" in embodiments of the present disclosure includes a shoulder area, for example, an area in which a scapula is located, and an area between two scapulae.

In a related technology, a structure of a backrest of a vehicle seat is usually designed based on a normal seated viewing posture, and does not support comfort in a large-angle backrest reclining posture.

When the seat is in the large-angle backrest reclining posture, there are two comfort problems that need to be resolved. First, to fit a human waist curve, when the seat is in a sitting posture state, a lower area of the backrest (for example, an area in which a lumbar support is located) is usually in a slight protruding state. When an angle of the backrest is increased to the reclining posture state, a protrusion part presses against a partial area of a reclining human waist, resulting in an obvious back pressure feeling. In addition, there is an angular-shaped groove cavity between the backrest and the seat pan, which causes another partial area of the human waist to be suspended, consequently decreasing comfort of a human body in the reclining posture. Second, a human shoulder lacks support. Particularly, the area between the two scapulae is in a suspended state, consequently decreasing the comfort of the human body in the reclining posture.

In a related technology, an area of the backrest corresponding to the waist is designed as a planar shape, to improve comfort of the human body in the reclining posture. However, this also results in a decrease in comfort of the human body in the sitting posture. It can be learned that it is essential that the seat offers comfort in both sitting and reclining postures.

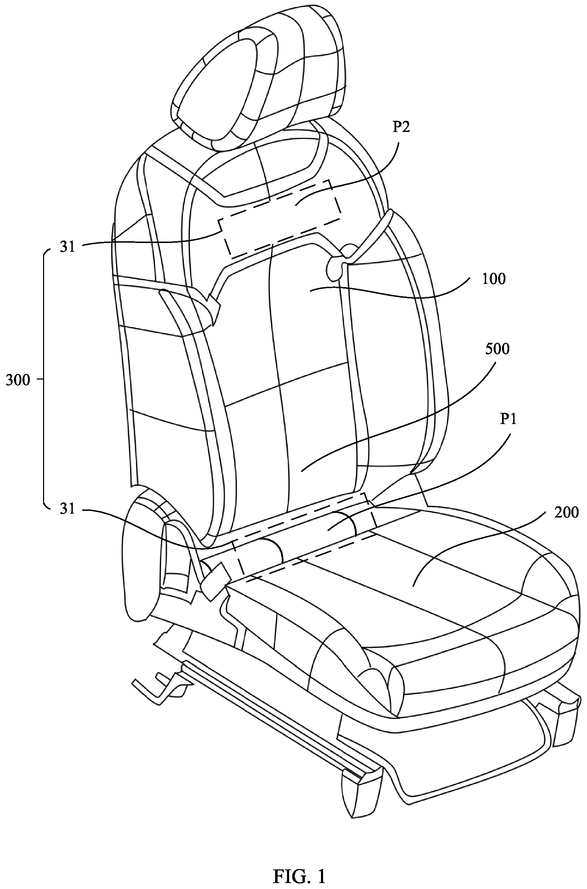

For a technical problem in the related technology, an embodiment of the present disclosure provides a seat. As shown in FIG. 1, the seat includes a backrest 100, a seat pan 200, and a pneumatic module 300. The pneumatic module 300 includes an air bladder 31. The air bladder 31 is located at at least one of a first position P1 and a second position P2. The first position P1 is a joint between the backrest 100 and the seat pan 200. The second position P2 is a side that is of the backrest 100 and that is away from the seat pan 200. The air bladder 31 is configured to be capable of providing a reclining posture support structure in an expanded state.

According to the seat provided in this embodiment of the present disclosure, the backrest 100 of the seat is rotatable relative to the seat pan 200, so that an angle between the backrest 100 and the seat pan 200 is adjustable, and the seat is switched between a sitting posture state and a reclining posture state.

The joint between the backrest 100 and the seat pan 200 in this embodiment of the present disclosure is a connection area between the backrest 100 and the seat pan 200, may include an area of a side that is of the backrest 100 and that is close to the seat pan 200, and may further include an area of a side that is of the seat pan 200 and that is close to the backrest 100.

In some examples, when the seat is in the sitting posture state, the joint between the backrest 100 and the seat pan 200 is not in contact with a human waist and/or a human hip. The position is a non-contact area of a human body, and together with the human body, forms triangular space.

The side that is of the backrest 100 and that is away from the seat pan 200 in this embodiment of the present disclosure includes an area on the backrest 100 corresponding to a human shoulder, to ensure that when the backrest 100 is in the reclining posture state, the air bladder 31 located in the area supports the human shoulder, particularly a suspended area between scapulae on both sides.

According to the seat provided in embodiments of the present disclosure, the pneumatic module 300 is arranged, and the air bladder 31 of the pneumatic module 300 provides the reclining posture support structure in the expanded state, to be used in the reclining posture state of the seat. When the seat is in the reclining posture state, the air bladder 31 located at the first position P1 can support a human waist at the joint between the backrest 100 and the seat pan 200 by using the reclining posture support structure of the air bladder 31, to improve comfort of the human waist in the reclining posture state. In addition, the air bladder 31 located at the second position P2 can support the human shoulder on the side that is of the backrest 100 and that is away from the seat pan 200 by using the reclining posture support structure of the air bladder 31, preventing shoulder suspension and thereby enhancing comfort of the human shoulder in the reclining posture state. When the seat is in the sitting posture state, the air bladder 31 is deflated to a contracted state, to avoid affecting comfort of the human body in a sitting posture. It can be learned that the seat provided in embodiments of the present disclosure can effectively improve comfort of the human body in a reclining posture without affecting the comfort of the human body in the sitting posture. In addition, based on an inflation/deflation characteristic, the air bladder 31 in the contracted state can be easily accommodated in the seat, and only needs to be inflated during application. This facilitates storage and usage, saving space inside a vehicle.

In some examples, if there is a lumbar support on the backrest 100 of the seat, and the lumbar support is not withdrawn or retracted when the seat is in the reclining posture state, the air bladder 31 located at the first position P1 may further alleviate back pressure feeling caused by the backrest in a partial area of the waist, and avoid suspension of another partial area of the waist, so that the waist is effectively supported.

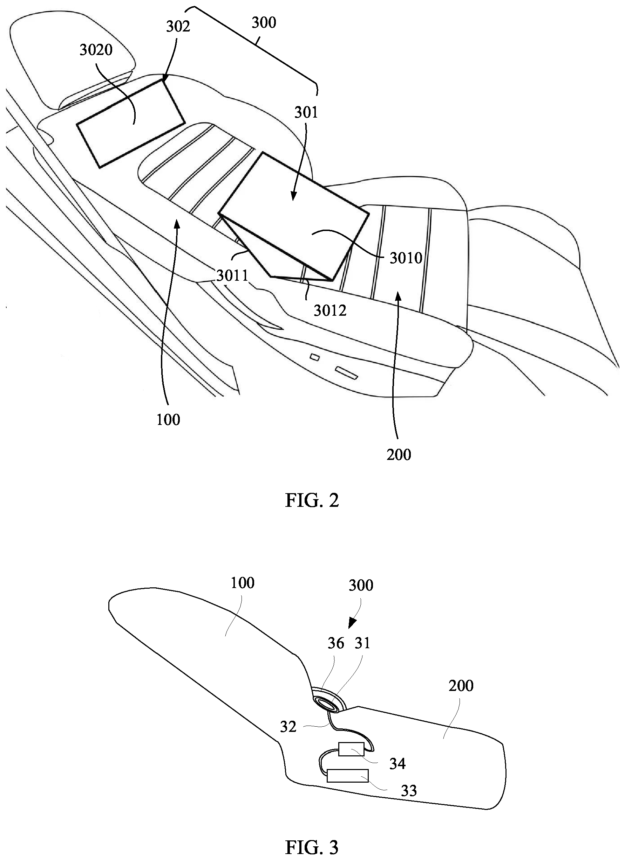

In some implementations, as shown in FIG. 2, in this embodiment of the present disclosure, the air bladder 31 located at the first position P1 is referred to as a first air bladder 301. The first air bladder 301 is configured to be capable of filling a groove cavity between the backrest 100 and the seat pan 200 when the backrest 100 is in the reclining posture state, and a reclining posture support structure of the first air bladder 301 includes a first support surface 3010 for supporting the human waist.

When the backrest 100 of the seat is in the reclining posture state, particularly in a large-angle fully reclining state, an expansion contour of the first air bladder 301 matches a contour of the groove cavity between the backrest 100 and the seat pan 200, so that the first air bladder 301 can fill the groove cavity between the backrest 100 and the seat pan 200, a gap between the seat in the reclining posture state and the human waist is effectively filled, and the human waist is effectively supported.

As shown in FIG. 1, one end of the first support surface 3010 of the first air bladder 301 is closely attached to a surface at a corresponding position on the backrest 100, and the other end of the first support surface 3010 is closely attached to a surface at a corresponding position on the seat pan 200. In addition, an attachment position presents a smooth transition. In this way, when the backrest 100 of the seat is in the reclining posture state, a flat support surface without depression can be formed from the backrest 100 to the seat pan 200, to support the human body.

In some examples, a shape of the first support surface 3010 of the first air bladder 301 may be a regular geometric shape, or may be an irregular geometric shape. For example, to simplify a manufacturing process of the first air bladder 301, the shape of the first support surface 3010 includes but is not limited to a rectangular shape, an elliptical shape, a rhombic shape, and the like.

The first support surface 3010 of the first air bladder 301 may be a flat surface, or may be a surface with a massage structure. The massage structure may be a structure that has a massage function, such as bumps or ribs.

In some examples, the reclining posture support structure of the first air bladder 301 further includes a first attachment surface 3011 and a second attachment surface 3012. One of the first attachment surface 3011 and the second attachment surface 3012 is attached to a side surface that is of the backrest 100 and that is close to the seat pan 200, and the other is attached to a side surface that is of the seat pan 200 and that is close to the backrest 100.

For example, as shown in FIG. 2, the first attachment surface 3011 is directly connected to the second attachment surface 3012, or is indirectly connected to each other through a transition structure. The other ends of the first support surface 3010 and the second attachment surface 3012 that are away from each other are respectively connected to two ends of the first support surface 3010.

The first attachment surface 3011 and the second attachment surface 3012 are respectively attached to surfaces that are of the backrest 100 and the seat pan 200 and that are close to each other, to ensure that the reclining posture support structure of the first air bladder 301 fully fills the groove cavity between the backrest 100 and the seat pan 200, and the reclining posture support structure of the first air bladder 301 is supported, providing more stable support effect for the human waist.

In some other implementations, in this embodiment of the present disclosure, the air bladder 31 located at the second position P2 is referred to as a second air bladder 302. The second air bladder 302 is configured to be capable of filling a gap between the backrest 100 and the human shoulder when the backrest 100 is in the reclining posture state, and a reclining posture support structure of the second air bladder 302 includes a second support surface 3020 for supporting the human shoulder.

When the backrest 100 of the seat is in the reclining posture state, particularly in a large-angle fully reclining state, an expansion contour of the second air bladder 302 matches a contour of the gap between the backrest 100 and the human shoulder, so that a gap between the seat in the reclining posture state and the human shoulder is effectively filled, and the human shoulder is effectively supported.

As shown in FIG. 2, two ends of the second support surface 3020 of the second air bladder 302 are closely attached to a surface at a corresponding shoulder on the backrest 100. In addition, an attachment position presents a smooth transition. In this way, when the backrest 100 of the seat is in the reclining posture state, a surface of the backrest 100 is an overall flat support surface.

Certainly, the second air bladder 302 further has a third attachment surface, and the third attachment surface is closely attached to a side surface that is of the backrest 100 and that is away from the seat pan 200, so that the reclining posture support structure of the second air bladder 302 fully fills the gap between the backrest 100 and the human shoulder, the reclining posture support structure of the second air bladder 302 is supported, providing more stable support effect for the human shoulder.

In some examples, a shape of the second support surface 3020 of the second air bladder 302 may be a regular geometric shape, or may be an irregular geometric shape. For example, to simplify a manufacturing process of the second air bladder 302, the shape of the second support surface 3020 includes but is not limited to a rectangular shape, an elliptical shape, a rhombic shape, and the like.

The second support surface 3020 of the second air bladder 302 may be a flat surface, or may be a surface with a massage structure. The massage structure may be a structure that has a massage function, such as bumps or ribs.

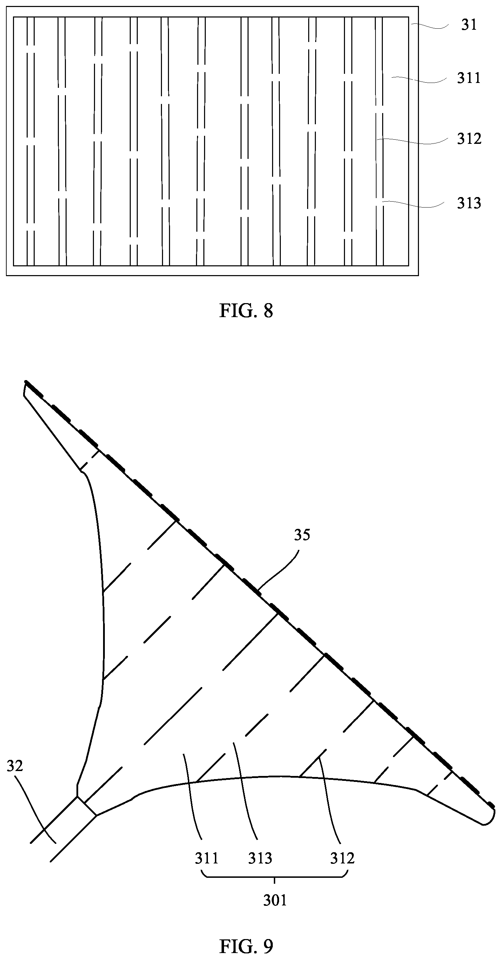

In this embodiment of the present disclosure, to make contours of reclining posture support structures corresponding to the first air bladder 301 and the second air bladder 302 close enough to their respective expected target contours, as shown in FIG. 8, FIG. 9, and FIG. 10, the air bladder 31 may include a plurality of air cavities 311, there is a barrier structure 312 between any two adjacent air cavities 311, and the barrier structure 312 has a vent hole 313. The vent hole 313 is configured to make two adjacent air cavities 311 communicate with each other, for inflation and deflation of all the air cavities 311.

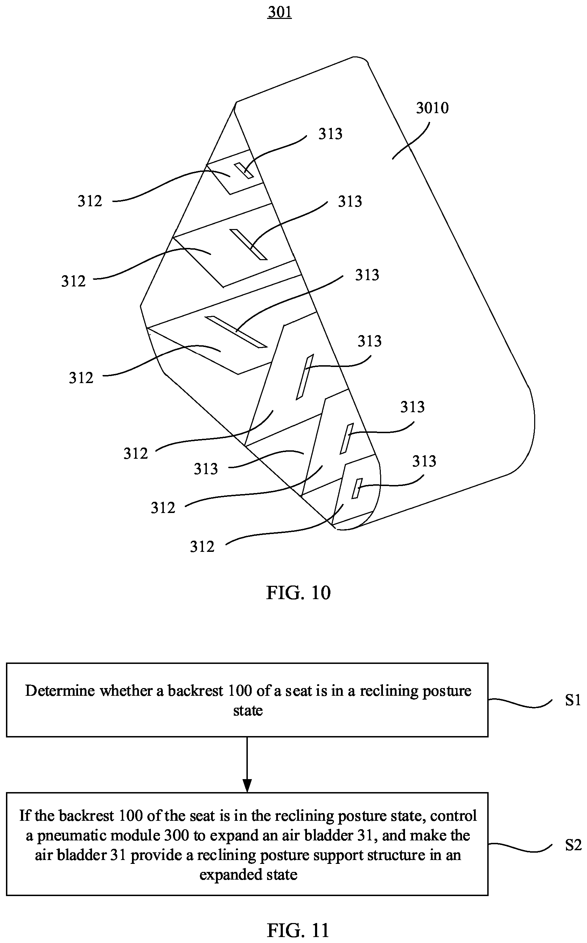

A plurality of barrier structures 312 are disposed in the air bladder 31, so that the barrier structures 312 can be used to form the plurality of air cavities 311. In addition, it can be learned with reference to FIG. 10 that, when the air bladder 31 expands, barrier structures 312 are subject to tension (which may be considered as an inner tensile structure). This helps shape an expansion shape of the air bladder 31, so that a contour of the reclining posture support structure of the air bladder 31 is close enough to an expected target contour.

In some examples, the air bladder 31 includes the plurality of barrier structures 312, the plurality of barrier structures 312 are sequentially distributed in a first direction, and the first direction is the same as a distribution direction of the backrest 100 and the seat pan 200.

The plurality of barrier structures 312 are sequentially distributed in the first direction, and correspondingly, a distribution direction of the plurality of air cavities 311 formed is also the first direction.

Lengths of different air cavities 311 are adjusted, so that an expanded state of a current part at which the air cavity 311 is located can be adjusted, thereby finally shaping an overall expanded state of the air bladder 31 formed by the plurality of air cavities 311.

A length direction of the air cavity 311 is a length direction of the barrier structure 312, and the length directions of the air cavity 311 and the barrier structure 312 are the same as a distribution direction between a support surface and an attachment surface of the air bladder 31. In other words, one end of the barrier structure 312 extends to the support surface of the air bladder 31, and the other end of the barrier structure 312 extends to the attachment surface of the air bladder 31 (refer to FIG. 10).

The foregoing support surface of the air bladder 31 is the first support surface 3010 or the second support surface 3020, and the attachment surface of the air bladder 31 is the first attachment surface 3011, the second attachment surface 3012, or the third attachment surface.

When an expansion form of the air bladder 31 is a regular geometric form, for example, for the second air bladder 302 located at the second position P2, the expansion form of the second air bladder 302 may be a rectangle, an ellipse, or the like, and lengths of the plurality of barrier structures 312 may be the same.

When the expansion form of the air bladder 31 is an irregular geometric form, for example, for the first air bladder 301 located at the first position P1, lengths of the plurality of barrier structures 312 are not completely the same or are different from each other.

As shown in FIG. 9, for the first air bladder 301 located at the first position P1, the first air bladder 301 is configured to fill the groove cavity between the backrest 100 and the seat pan 200, and a cross-sectional contour of the groove cavity is triangular. As a result, a cross-sectional contour of the reclining posture support structure of the first air bladder 301 is correspondingly triangular. In this case, lengths of one or more barrier structures 312 located in a middle area may be longer, and starting from the middle area, lengths of the plurality of barrier structures 312 located on two side areas are shorter.

For example, as shown in FIG. 9, a length of a barrier structure 312 located in a middle position (the middle position may be considered as a center position of the joint between the backrest 100 and the seat pan 200, which is referred to as a joint center for short) is the longest, and lengths of a plurality of barrier structures 312 located on two sides gradually become shorter in a direction gradually away from the joint center of the backrest 100 and the seat pan 200. This helps make the cross-sectional contour of the reclining posture support structure of the first air bladder 301 be triangular and maintain strong structural stability.

In this embodiment of the present disclosure, structural forms of the plurality of barrier structures 312 may be the same, may be partially the same, or may be different from each other. The structural form of the barrier structure 312 in the length direction of the barrier structure 312 may be a straight-line strip structure, or may be a wave-shaped strip structure. The structural form of the barrier structure 312 is selected based on a contour of the reclining posture support structure of the air bladder 31.

A larger quantity of barrier structures 312 in the air bladder 31 indicates more precise shaping of the contour of the reclining posture support structure of the air bladder 31. However, this affects inflation/deflation speed of the air bladder 31 to some extent. In this embodiment of the present disclosure, a quantity of the barrier structures 312 is designed to meet the following conditions: A contour of a reclining posture support structure is the same as a target contour as possible, so that the inflation/deflation speed of the air bladder 31 meets a specified inflation/deflation rate threshold.

The barrier structure 312 has the vent hole 313. There may be one or more vent holes 313 on each barrier structure 312. For example, there may be two, three, or four vent holes 313. A quantity of vent holes 313 on the plurality of barrier structures 312 may be the same or may be different. A shape of the vent hole 313 includes but is not limited to at least one of a circle, a rectangle, an ellipse, or a kidney shape.

In some examples, for any two adjacent barrier structures 312, vent holes 313 on the two adjacent barrier structures 312 are arranged in a staggered manner. In other words, a projection that is of a vent hole 313 on a first barrier structure 312 and that is onto a surface of a second barrier structure 312 does not overlap a vent hole 313 on the second barrier structure 312. This facilitates rapid and uniform dispersion of air into the plurality of air cavities 311, and enhancement of support strength of the air bladder 31 in the expanded state.

In some examples, the air bladder 31 may be prepared by using a plastic film material through a hot pressing molding process. For example, a vent hole 313 may be provided at a corresponding position on a film material, and the film material with the vent hole 313 is connected to an air bladder film material of an air bladder 31 by using a hot pressing process, to form a barrier structure 312. Then, each part of the air bladder film material of the air bladder 31 is connected by using hot pressing, and finally, the air bladder 31 is obtained. This manner has advantages such as a simple process, an easy operation, strong structural stability of the formed barrier structure 312, and a low cost. Certainly, it is not excluded that a sewing thread may be used to perform sealing sewing on the air bladder film material, to form the barrier structure 312.

This embodiment of the present disclosure describes a structure and arrangement of the air bladder 31 in the pneumatic module 300 as an example. In addition to the air bladder 31, as shown in FIG. 3 to FIG. 6, the pneumatic module 300 provided in this embodiment of the present disclosure further includes an air pipe 32, an air pump 33, and an air valve control member 34. The air bladder 31 communicates with the air pump 33 through the air pipe 32. The air valve control member 34 is located in the air pipe 32. The seat further includes a control module 400, and the control module 400 is electrically connected to the air pump 33 and the air valve control member 34.

During application, the control module 400 can control turn-on or turn-off of the air pump 33, so that inflation into the air bladder 31 by the air pump 33 is achieved. In addition, the control module 400 can control opening, closing, and an opening degree of the air valve control member 34, so that an inflation amount inside the air bladder 31 is adjusted, and air pressure inside the air bladder 31 reaches a specified pressure threshold.

The air valve control member 34 is also referred to as an air valve controller. For example, the air valve control member 34 may include a plurality of valve bodies, and each valve body may be connected to and control one corresponding air bladder 31.

The air pipe 32 includes an air intake section and an air transfer section. The air pump 33 communicates with an air inlet of the air valve control member 34 through the air intake section of the air pipe 32, and an air outlet of a corresponding valve body of the air valve control member 34 communicates with the air bladder 31 through the air transfer section of the air pipe 32.

When a plurality of air bladder components are disposed in the seat (the air bladder component includes at least one of the first air bladder 301 and the second air bladder 302), for the plurality of air bladder components, the plurality of valve bodies are disposed in the air valve control member 34, and correspondingly, a plurality of air transfer sections of the air pipe 32 are disposed, so that each air bladder component communicates with a corresponding valve body of the air valve control member 34 through a corresponding air transfer section of the air pipe 32. In this case, one air pump 33 may be shared, and an air intake section of the air pipe 32 is shared.

In some examples, the air pipe 32 may be made of a flexible polymer material, for example, polytetrafluoroethylene, so that the air pipe 32 is not prone to deformation, pressure loss can be reduced, and it is ensured that the air pressure in the air bladder 31 is stable.

In some examples, the air intake section of the air pipe 32 has an air processing structure. The air processing structure includes but is not limited to a muffler, a filter, and the like. The muffler is configured to reduce airflow noise generated by the air pump 33 during operation, and the filter is configured to filter impurities in the air.

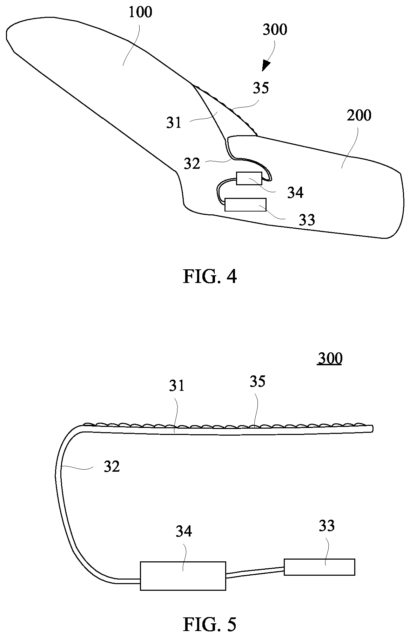

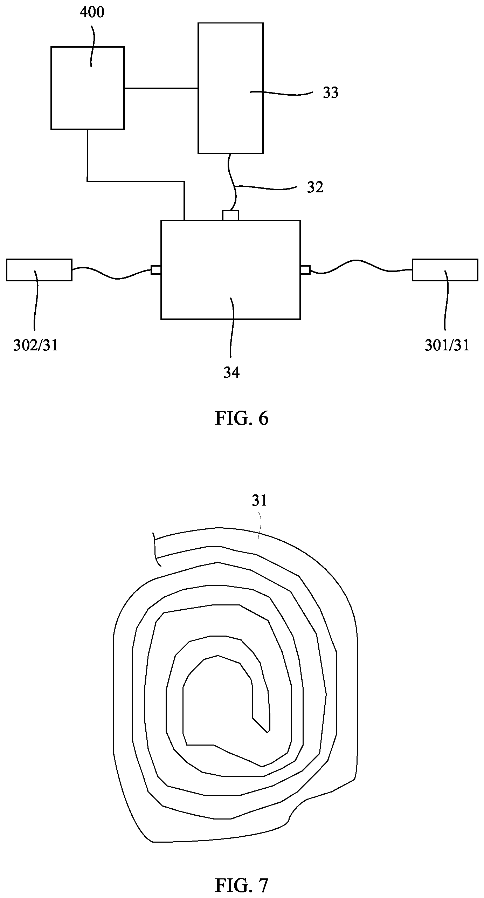

When occupants have different weights, pressure applied by each occupant on an expanded air bladder 31 is different. To ensure that each occupant can obtain a same sense of support from the expanded air bladder 31, in some implementations, as shown in FIG. 5 and FIG. 6, the pneumatic module 300 provided in this embodiment of the present disclosure further includes a pressure sensor 35. The pressure sensor 35 is located on a surface of the air bladder 31 and is electrically connected to the control module 400. The pressure sensor 35 is configured to: detect a pressure signal received by the air bladder 31, and transfer the pressure signal to the control module 400.

The pressure sensor 35 detects the pressure signal received by the air bladder 31 and transfers the pressure signal to the control module 400. The control module 400 can control, based on the pressure signal, the pneumatic module 300 to adjust an air amount of the air bladder 31 to a target air amount (for example, control the opening degree of the air valve control member 34), so that the air bladder 31 in the expanded state provides a good and comfortable sense of support for the occupants. It can be learned that, based on the foregoing arrangement, the seat may adjust an air inflation/deflation amount of the air bladder 31 based on data such as weight and pressure of occupants, so that the air bladder 31 obtains different air pressure.

There may be one or more pressure sensors 35. When a plurality of pressure sensors 35 are evenly distributed on the support surface of the air bladder 31, obtaining the pressure signal received by the air bladder 31 is more accurate and reliable. For example, FIG. 1 shows an example in which the plurality of pressure sensors 35 are evenly distributed on the support surface of the air bladder 31.

In some examples, the pressure sensor 35 provided in this embodiment of the present disclosure is a surface-type pressure sensor, to improve sensing sensitivity of the pressure sensor 35 to weight and pressure of the occupants.

In some examples, the pressure sensor 35 provided in this embodiment of the present disclosure is a flexible pressure sensor. The flexible pressure sensor has a stepless pressure sensing characteristic, and can accurately sense a change in pressure data on the surface of the air bladder 31.

In some examples, the air bladder 31 in this embodiment of the present disclosure may be further configured with a massage function (without affecting reclining posture support effect of the air bladder 31). Under control of the control module 400 and the air valve control member 34, the air bladder 31 can perform a dynamic massage motion (which includes a dynamic bulge and slight contraction), so that the air bladder 31 has the massage function, thereby further improving user experience.

For example, an opening/closing frequency of a corresponding valve body in the air valve control member 34 is controlled to control a motion status of the air bladder 31, so that the air bladder 31 has the massage function, and massage effect of different modes may be further obtained.

In some implementations, as shown in FIG. 3, the air bladder 31 in this embodiment of the present disclosure is arranged in a built-in manner. In addition, when the air bladder 31 is in the contracted state, the air bladder 31 located at at least one of the first location P1 and the second location P2 can be arranged into a concealed structure.

For example, the air bladder 31 located at the first position P1 is the first air bladder 301, and the first air bladder 301 can be arranged into a concealed structure in a contracted state. Further, the air bladder 31 located at the second position P2 is the second air bladder 302, and the second air bladder 302 can be arranged into a concealed structure in a contracted state.

The air bladder 31 is built in at least one of the first position P1 and the second position P2 on the seat, so that stable storage of the air bladder 31 is achieved without affecting aesthetics of the seat, and loss is prevented. In addition, when the air bladder 31 is in the contracted state, the air bladder 31 can be arranged into the concealed structure, so that the air bladder 31 exists in a concealed manner. This effectively avoids reducing comfort of the seat in the sitting posture state, and also contributes to the aesthetics of the seat.

In some examples, the foregoing concealed structure is formed by winding or folding the air bladder 31. For example, FIG. 7 shows an example of a winding arrangement of the air bladder 31.

A space volume of the air bladder 31 can be reduced by the winding arrangement or a folding arrangement, so that the air bladder 31 is arranged in a corresponding position of the seat in a concealed manner.

In some examples, the first air bladder 301 located at the first position P1 may be arranged into the concealed structure. That is because, when the seat is in the sitting posture state, the first position P1 of the seat, namely, the joint between the backrest 100 and the seat pan 200, is not in contact with the human waist and/or the human hip, and the position is the non-contact area of the human body, and together with the human body, forms the triangular space. In addition, refer to FIG. 1. The first position P1 is usually arranged in a slight protruding manner, so that the first position P1 of the seat has more accommodation space, to accommodate a contracted first air bladder 301. In this way, when the first air bladder 301 is arranged into the concealed structure, the first air bladder 301 is easier to be concealed in the position, and the aesthetics of the seat are not affected.

In some examples, as shown in FIG. 3, the pneumatic module 300 further includes a cover 36. The cover 36 is detachably located at at least one of the first position P1 and the second position P2. The cover 36 is configured to cover and conceal the air bladder 31.

The cover 36 is disposed at the first position P1 and/or the second position P2 of the seat, so that the air bladder 31 can be covered and concealed. In addition, the cover 36 is removed, so that it is convenient to inflate and expand the air bladder 31, and the air bladder 31 in the contracted state is conveniently arranged, to facilitate the winding arrangement or the folding arrangement of the air bladder 31.

The detachable cover 36 includes, but is not limited to, the following implementations: A first part of the cover 36 is detachably connected to a second part of the cover 36, so that the air bladder 31 located in the cover 36 is exposed, and this facilitates flattening of the air bladder 31. The first part of the cover 36 and the second part of the cover 36 may be respectively arranged and fastened to corresponding positions on the seat. Alternatively, the cover 36 is detachably connected to the seat, so that the air bladder 31 is exposed and flattened, to facilitate expansion of the air bladder 31. The foregoing detachable connection manner may be a hook-and-loop connection, a button connection, a latch connection, a zipper connection, and the like.

In some examples, the cover 36 has an opening, and the opening is configured to allow a hand of a user to reach inside the cover 36 to wind or fold the air bladder 31 in the contracted state.

To improve convenience of the foregoing winding operation or the folding operation, the opening may be an elastic opening, which is in a closed state when the elastic opening is in a normal state, and is in an open state during stretching.

A material of the cover 36 may be designed to be the same as a surface material of the seat, to achieve concealed effect. Alternatively, the cover 36 may be prepared by using an elastic material.

According to another aspect, an embodiment of the present disclosure further provides a vehicle. The vehicle includes a vehicle body and a plurality of seats located inside the vehicle body, and at least one of the plurality of seats is any one of the foregoing seat in embodiments of the present disclosure.

The vehicle provided in this embodiment of the present disclosure has all advantages of the foregoing seat.

According to the vehicle provided in this embodiment of the present disclosure, a backrest of the seat of the vehicle is rotatable relative to a seat pan, so that the seat of the vehicle can switch between a sitting posture and a reclining posture.

In some examples, when the seat of the vehicle is in the sitting posture, an air bladder 31 in a pneumatic module 300 is in a contracted state, to avoid affecting comfort of a normal sitting posture. Further, the air bladder 31 in the contracted state can be wound or folded to form a concealed structure, so that the air bladder 31 is arranged in a concealed manner, thereby improving aesthetics of the seat.

In some examples, when the seat of the vehicle is in the reclining posture, particularly in a large-angle fully reclining state, an air bladder 31 in a pneumatic module 300 is in an expanded state, to provide a reclining posture support structure, so that comfort of the reclining posture is improved.

Further, when the air bladder 31 is in the expanded state, a pressure signal received by the air bladder 31 may be detected by a pressure sensor 35, and the pneumatic module 300 is controlled, based on the pressure signal, to adjust an air amount of the air bladder 31 to a target air amount, so that occupants with different weights all obtain a better sense of support.

For example, the vehicle includes but is not limited to an automobile, for example, a hatchback or a sedan.

According to still another aspect, an embodiment of the present disclosure further provides a seat status control method. The seat status control method is applied to any one of the foregoing seats or any one of the foregoing vehicles.

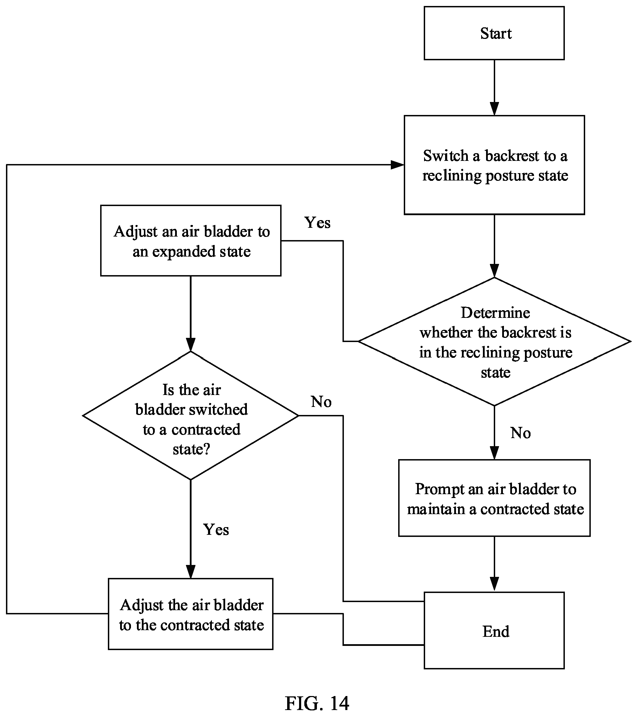

FIG. 11 is a flowchart of an example of the seat status control method according to an embodiment of this application. The method can be performed by at least a computer device. As shown in FIG. 11 and with reference to FIG. 14, the seat status control method includes the following steps.

Step S1: Determine whether a backrest 100 of the seat is in the reclining posture state.

In some examples, a pneumatic module 300 provided in this embodiment of the present disclosure further includes an air pipe 32, an air pump 33, and an air valve control member 34. An air bladder 31 is connected to the air pump 33 through the air pipe 32. The air valve control member 34 is located in the air pipe 32. The seat further includes a control module 400, and the control module 400 is electrically connected to the air pump 33 and the air valve control member 34.

In some examples, determining whether the backrest 100 of the seat is in the reclining posture state in step S1 further includes: obtaining a position signal of the backrest 100 based on an angle sensor arranged in the seat, transferring the position signal to the control module 400, and determining, by the control module 400, based on the position signal, whether the backrest 100 is in the reclining posture state, particularly in a large-angle fully reclining state (for example, an angle between the backrest 100 and the seat pan 200 is 135° to 180°).

Step S2: If the backrest 100 of the seat is in the reclining posture state, control the pneumatic module 300 to expand the air bladder 31, and make the air bladder 31 provide a reclining posture support structure in the expanded state.

The seat in the reclining posture state is implemented by using Step S2, particularly in the large-angle fully reclining state. The air bladder 31 expands and provides the reclining posture support structure, so that at least one of a human waist and a human shoulder is supported, and comfort of the seat in the reclining posture is improved.

In some examples, the pneumatic module 300 further includes a cover 36, the cover 36 is detachably located at at least one of a first position P1 and a second position P2, and the cover 36 is configured to cover and conceal the air bladder 31.

Controlling the pneumatic module 300 to expand the air bladder 31, and making the air bladder 31 provide the reclining posture support structure in the expanded state, if the backrest 100 of the seat is in the reclining posture state, in Step S2, further includes: if the backrest 100 of the seat is in the reclining posture state, removing the cover 36, exposing the air bladder 31, to flatten the air bladder 31, controlling the pneumatic module 300 to expand the air bladder 31, and making the air bladder 31 provide the reclining posture support structure in the expanded state.

Certainly, when the backrest 100 of the seat needs to be switched to a sitting posture state, the pneumatic module 300 is controlled to contract the air bladder 31. Further, the contracted air bladder 31 is arranged into a concealed structure.

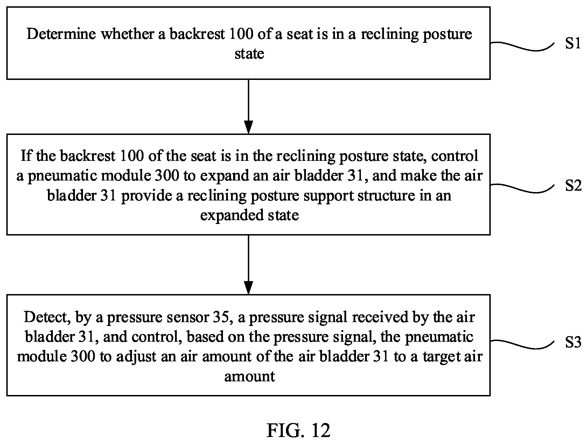

In some examples, the pneumatic module 300 further includes a pressure sensor 35. As shown in FIG. 12 and with reference to FIG. 14, the seat status control method provided in this embodiment of the present disclosure further includes the following steps.

Step S3: Detect, by the pressure sensor 35, a pressure signal received by the air bladder 31, and control, based on the pressure signal, the pneumatic module 300 to adjust an air amount of the air bladder 31 to a target air amount.

For example, detecting, by the pressure sensor 35, the pressure signal received by the air bladder 31 in step S3 further includes: transferring the pressure signal to the control module 400, and controlling, by the control module 400, based on the pressure signal, the pneumatic module 300 to adjust the air amount of the air bladder 31 to the target air amount. It can be learned that, based on the foregoing arrangement, the seat may adjust an air inflation/deflation amount of the air bladder 31 based on data such as weight and pressure of occupants, so that the air bladder 31 obtains different air pressure, and the air bladder 31 in the expanded state provides a good and comfortable sense of support for the occupant.

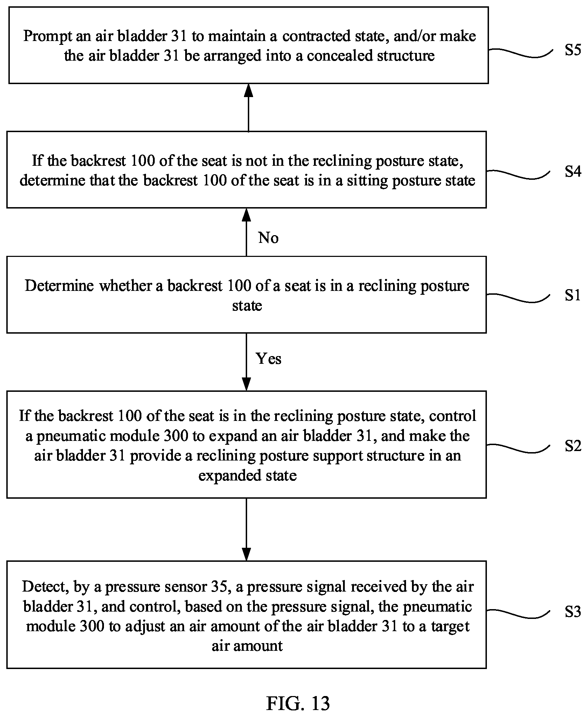

In some implementations, as shown in FIG. 13 and with reference to FIG. 14, the seat status control method provided in this embodiment of the present disclosure further includes the following steps.

Step S4: If the backrest 100 of the seat is not in the reclining posture state, determine that the backrest 100 of the seat is in the sitting posture state.

Generally, the backrest 100 of the seat switches between the reclining posture state and the sitting posture state. For example, if it is determined that the backrest 100 of the seat is not in the reclining posture state, the backrest 100 of the seat may be in the sitting posture state by default.

Step S5: Prompt the air bladder 31 to maintain a contracted state, and/or make the air bladder 31 be arranged into the concealed structure.

When the backrest 100 of the seat is in the sitting posture state, the air bladder 31 is prompted to maintain the contracted state, and the pneumatic module 300 cannot start to inflate.

In some examples, the pneumatic module 300 further includes the cover 36, the cover 36 is detachably located at at least one of the first position P1 and the second position P2, and the cover 36 is configured to cover and conceal the air bladder 31. When the air bladder 31 is in the contracted state, the air bladder 31 located at at least one of the first position P1 and the second position P2 can be arranged into the concealed structure, for example, in a winding manner or a folding manner. It can be learned that, when it is determined that the backrest 100 of the seat is in the sitting posture state, because the air bladder 31 is arranged by winding or folding and covered by the cover 36, the air bladder 31 cannot be normally inflated to the expanded state.

In some implementations, the seat provided in this embodiment of the present disclosure further includes a lumbar support 500. The lumbar support 500 is located on a backrest 100, and the lumbar support 500 includes a protruding state and a retracted state.

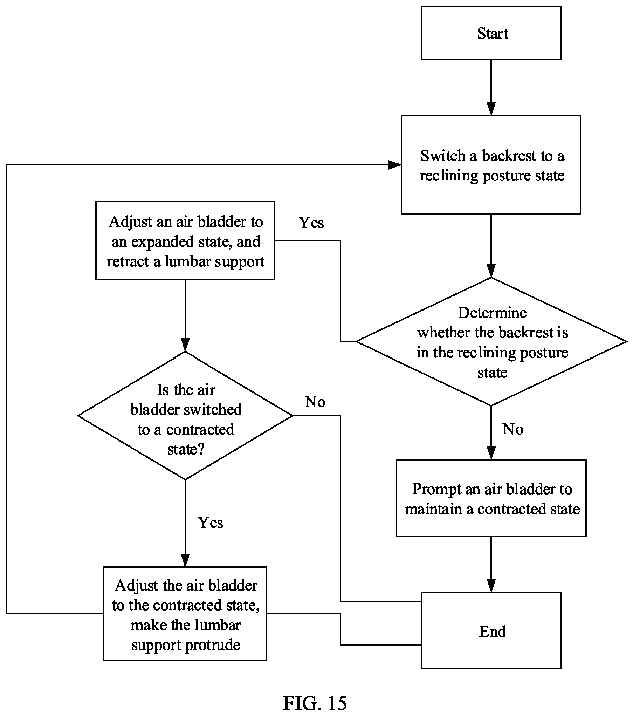

FIG. 15 shows a seat status control method. Refer to FIG. 15. The seat status control method provided in this embodiment of the present disclosure further includes: if the backrest 100 of the seat is in a reclining posture state, controlling the lumbar support 500 to be in the retracted state; and if the backrest 100 of the seat is in a sitting posture state, controlling the lumbar support 500 to be in the protruding state.

For example, if a control module 400 determines that the backrest 100 of the seat is in the reclining posture state, the control module 400 controls the lumbar support 500 to retract to the retracted state. In addition, the control module 400 controls a pneumatic module 300 to expand an air bladder 31, and makes the air bladder 31 provide a reclining posture support structure in an expanded state. An execution sequence of a retracting operation of the lumbar support 500 and an expansion operation of the air bladder 31 may not be limited. The retracting operation of the lumbar support 500 may be performed before the expansion operation of the air bladder 31, the expansion operation of the air bladder 31 may be performed before the retracting operation of the lumbar support 500, or the retracting operation of the lumbar support 500 and the expansion operation of the air bladder 31 may be performed synchronously.

In this case, the lumbar support 500 is retracted to avoid causing back pressure feeling to a human body, and the air bladder 31 is separately used to provide support for a human waist, for comfort of the human waist in a reclining posture.

For example, if the control module 400 determines that the backrest 100 of the seat is in the sitting posture state, the control module 400 controls the lumbar support 500 to protrude to the protruding state. In addition, the control module 400 controls the pneumatic module 300 to contract the air bladder 31. An execution sequence of a protrusion operation of the lumbar support 500 and a contraction operation of the air bladder 31 may not be limited. The protrusion operation of the lumbar support 500 may be performed before the contraction operation of the air bladder 31, the contraction operation of the air bladder 31 may be performed before the protrusion operation of the lumbar support 500, or the protrusion operation of the lumbar support 500 and the contraction operation of the air bladder 31 may be performed synchronously.

According to still another aspect, an embodiment of the present disclosure further provides a seat control apparatus. The control apparatus includes a control module 400. The control module 400 is configured to control a backrest 100 of a seat to switch between a sitting posture state and a reclining posture state. The control module 400 is further configured to control a pneumatic module 300 in the seat, so that an air bladder 31 switches between a contracted state and an expanded state.

For example, the control module 400 controls the backrest 100 of the seat to be in a sitting posture, and controls the air bladder 31 in the pneumatic module 300 to be in the contracted state. The control module 400 controls the backrest 100 of the seat to be in a reclining posture, particularly in a large-angle fully reclining state, and controls the air bladder 31 in the pneumatic module 300 to be in the expanded state, to provide a reclining posture support structure.

An embodiment of the present disclosure further provides a computer device. The computer device includes a memory and a processor. The memory stores at least one piece of program code, and the program code is loaded and executed by the processor to implement the foregoing seat status control method.

A controller may include one or more processing cores, for example, a 4-core processor or an 8-core processor. The controller may be implemented in at least one hardware form of a DSP (Digital Signal Processing, digital signal processing), an FPGA (Field-Programmable Gate Array, field-programmable gate array), or a PLA (Programmable Logic Array, programmable logic array). The controller may alternatively include a main processor and a coprocessor. The main processor is a processor configured to process data in a wake-up state, and is also referred to as a CPU (Central Processing Unit, central processing unit). The coprocessor is a low-power processor configured to process data in a standby state. In some embodiments, a GPU (Graphics Processing Unit, graphics processing unit) may be integrated into the processor. The GPU is configured to be responsible for rendering and drawing content that needs to be displayed on a display. In some embodiments, the controller may further include an AI (Artificial Intelligence, artificial intelligence) processor. The AI processor is configured to process a computing operation related to machine learning.

The memory may include one or more computer-readable storage media. The computer-readable storage media may be non-transitory. The memory may further include a high-speed random access memory and a non-volatile memory, for example, one or more magnetic disk storage devices or a flash memory storage device. In some embodiments, a non-transitory computer-readable storage medium in the controller is configured to store at least one instruction. The at least one instruction is executed by the controller to implement the seat status control method provided in the method embodiments of this application.

An embodiment of the present disclosure further provides a computer-readable storage medium. The storage medium stores a computer program, and the computer program is executed by a processor, to implement the foregoing seat status control method.

An embodiment of the present disclosure further provides a chip. The chip includes a programmable logic circuit and/or program instructions. When the chip runs, the chip is configured to implement the foregoing seat status control method.

An embodiment of the present disclosure further provides a computer program product or a computer program. The computer program product or the computer program includes computer instructions. The computer instructions are stored in a computer-readable storage medium. A processor reads and executes the computer instructions from the computer-readable storage medium, to implement the foregoing seat status control method.

## Claims

1. A seat, wherein the seat comprises a backrest (100), a seat pan (200), and a pneumatic module (300), the pneumatic module (300) comprises an air bladder (31), the air bladder (31) is located at at least one of a first position (P1) and a second position (P2), the first position (P1) is a joint between the backrest (100) and the seat pan (200), and the second position (P2) is a side that is of the backrest (100) and that is away from the seat pan (200); and
the air bladder (31) is configured to be capable of providing a reclining posture support structure in an expanded state.

2. The seat according to claim 1, wherein the air bladder (31) located at the first position (P1) is referred to as a first air bladder (301), the first air bladder (301) is configured to be capable of filling a groove cavity between the backrest (100) and the seat pan (200) when the backrest (100) is in a reclining posture state, and a reclining posture support structure of the first air bladder (301) comprises a first support surface (3010) for supporting a human waist.

3. The seat according to claim 2, wherein the reclining posture support structure of the first air bladder (301) further comprises a first attachment surface (3011) and a second attachment surface (3012), one of the first attachment surface (3011) and the second attachment surface (3012) is attached to a side surface that is of the backrest (100) and that is close to the seat pan (200), and the other is attached to a side surface that is of the seat pan (200) and that is close to the backrest (100).

4. The seat according to claim 1, wherein the air bladder (31) located at the second position (P2) is referred to as a second air bladder (302), the second air bladder (302) is configured to be capable of filling a gap between the backrest (100) and a human shoulder when the backrest (100) is in a reclining posture state, and a reclining posture support structure of the second air bladder (302) comprises a second support surface (3020) for supporting the human shoulder.

5. The seat according to any one of claims 1 to 4, wherein the air bladder (31) comprises a plurality of air cavities (311), there is a barrier structure (312) between any two adjacent air cavities (311), and the barrier structure (312) has a vent hole (313).

6. The seat according to any one of claims 1 to 5, wherein the pneumatic module (300) further comprises an air pipe (32), an air pump (33), and an air valve control member (34), the air bladder (31) communicates with the air pump (33) through the air pipe (32), and the air valve control member (34) is located in the air pipe (32); and
the seat further comprises a control module (400), and the control module (400) is electrically connected to the air pump (33) and the air valve control member (34).

7. The seat according to claim 6, wherein the pneumatic module (300) further comprises a pressure sensor (35), and the pressure sensor (35) is located on a surface of the air bladder (31) and is electrically connected to the control module (400); and
the pressure sensor (35) is configured to: detect a pressure signal received by the air bladder (31), and transfer the pressure signal to the control module (400).

8. The seat according to any one of claims 1 to 7, wherein the air bladder (31) is arranged in a built-in manner; and
when the air bladder (31) is in a contracted state, the air bladder (31) located at at least one of the first position (P1) and the second position (P2) is capable of being arranged into a concealed structure.

9. The seat according to claim 8, wherein the concealed structure is formed by winding or folding the air bladder (31).

10. The seat according to claim 9, wherein the pneumatic module (300) further comprises a cover (36), the cover (36) is detachably located at at least one of the first position (P1) and the second position (P2), and the cover (36) is configured to cover and conceal the air bladder (31).

11. A vehicle, wherein the vehicle comprises a vehicle body and a plurality of seats located inside the vehicle body, and at least one of the plurality of seats is the seat according to any one of claims 1 to 10.

12. A seat status control method, wherein the seat status control method is applied to the seat according to any one of claims 1 to 10 or the vehicle according to claim 11; and
the seat status control method comprises:
determining whether a backrest (100) of the seat is in a reclining posture state; and
if the backrest (100) of the seat is in the reclining posture state, controlling the pneumatic module (300) to expand the air bladder (31), and making the air bladder (31) provide a reclining posture support structure in an expanded state.

13. The seat status control method according to claim 12, wherein the pneumatic module (300) further comprises a pressure sensor (35); and
the seat status control method further comprises:
detecting, by the pressure sensor (35), a pressure signal received by the air bladder (31); and
controlling, based on the pressure signal, the pneumatic module (300) to adjust an air amount of the air bladder (31) to a target air amount.

14. The seat status control method according to claim 12, wherein the seat status control method further comprises:
if the backrest (100) of the seat is not in the reclining posture state, determining that the backrest (100) of the seat is in a sitting posture state; and
prompting the air bladder (31) to maintain a contracted state, and/or making the air bladder (31) be arranged into a concealed structure.

15. The seat status control method according to any one of claims 12 to 14, wherein the seat further comprises a lumbar support (500), the lumbar support (500) is located on the backrest (100), and the lumbar support (500) comprises a protruding state and a retracted state; and
the seat status control method further comprises: if the backrest (100) of the seat is in the reclining posture state, controlling the lumbar support (500) to be in the retracted state; and if the backrest (100) of the seat is in the sitting posture state, controlling the lumbar support (500) to be in the protruding state.
